# EUROPEAN PATENT SPECIFICATION

(11) **EP 4 129 609 B1**
(45) Date of publication and mention of the grant of the patent: **27.11.2024**
(21) Application number: 21776541.1
(22) Date of filing: 22.03.2021
(51) Int. Cl.: B29C 41/14, B29C 41/36, C08F 293/00, C08L 53/02

(54) **DIP-MOLDED ARTICLE**
TAUCHGEFORMTER ARTIKEL
ARTICLE MOULÉ PAR IMMERSION

(30) Priority: 26.03.2020 JP 2020056387
(43) Date of publication of application: 08.02.2023
(73) Proprietor: Denka Company Limited, Tokyo 103-8338 (JP)
(72) Inventor: KUMAGAI, Yushi, Tokyo 103-8338 (JP); NISHINO, Wataru, Tokyo 103-8338 (JP); SAITO, Yutaka, Tokyo 103-8338 (JP); KOBAYASHI, Naoki, Tokyo 103-8338 (JP)
(74) Representative: Gulde & Partner
(86) International application number: PCT/JP2021/011779
(87) International publication number: WO 2021/193562

(56) References cited:
- EP-A1- 2 585 289
- EP-A1- 3 409 719
- WO-A1-2007/007681
- WO-A1-2018/181801
- WO-A1-2019/026914
- JP-A- 2010 001 458
- JP-A- 2014 524 490
- JP-A- 2016 538 360
- JP-A- 2016 538 360
- JP-B2- 6 041 650
- US-A1- 2019 031 788
- US-A1- 2019 177 496

## Description

### TECHNICAL FIELD

This invention relates to a immersion-molded body.

### BACKGROUND ART

A polychloroprene latex is known as a material for medical surgical gloves, examination gloves, industrial gloves, balloons, catheters, rubber boots, and other immersion-molded bodies. It is also used as a paint, adhesive, and bonding agent by blending with various additives.

Various technologies have been proposed for polychloroprene for an immersion-molded body. As examples of the prior art literature, a copolymer latex of chloroprene and 2,3-dichloro-1,3-butadiene (see, for example, WO 2019/009038 A1), a modified polychloroprene latex copolymerized with chloroprene and methacrylic acid (see, for example, JP 2014-114342), a chloroprene-based polymer latex without a vulcanizing accelerator (see, for example, WO 2016/166998 A1), a polychloroprene latex containing zinc white having an inorganic salt and zinc oxide (see, for example, WO 2013/015043 A1) are known.

In addition, examples of the prior art literature for a chloroprene-based block copolymer include a copolymer obtained by polymerizing chloroprene using polystyrene containing an azo group as an initiator (see, for example, JP H3-207710), a copolymer obtained by polymerizing dithiocarbamated polychloroprene with an aromatic vinyl monomer (see, for example, JP H3-212414), a copolymer obtained by linking a chloroprene-based polymer to a hydrophilic oligomer or a hydrophilic polymer (see, for example, JP 2007-297502), a copolymer having a block of an aromatic vinyl compound polymer and a block of a chloroprene-based polymer, wherein the copolymer has a specific number average molecular weight and the block of the chloroprene-based polymer has a specific number average molecular weight (see, for example, WO 2018/181801 A1), and a copolymer with a block of an acrylic ester polymer and a block of a chloroprene-based polymer (see, for example, WO 2019/026914 A1), and further, a technique, which is a method of chemically bonding molecules without using vulcanization described in JP 2014-221901.

WO 2011/163662 A1 relates to vulcanization compositions used to vulcanize elastomeric articles, where the vulcanization compositions have reduced allergenic potential as compared to elastomeric articles formed using vulcanization compositions having non-fugitive accelerators and also relates to elastomeric articles formed using the vulcanization compositions and further relates to methods for making a reduced-allergenicity vulcanization composition, and to methods for using the vulcanization compositions to vulcanize elastomeric articles.

### SUMMARY OF INVENTION

### TECHNICAL PROBLEM

Conventionally, a polychloroprene rubber composition needs the use of a vulcanizing agent, such as sulfur, zinc oxide, magnesium oxide, and the like, and a vulcanizing accelerator, such as thiuram-based, dithiocarbamate-based, thiourea-based, guanidine-based, xanthogenate-based, thiazole-based in order to achieve the desired mechanical strength. Since the vulcanizing accelerator is a causative substance of type IV allergy that causes skin diseases such as dermatitis, the reduction or non-use of the vulcanizing accelerator is an important theme. Further, since the non-use of the vulcanizing accelerator leads not only to the reduction of allergies but also to the cost reduction, a rubber composition that exhibits sufficient mechanical strength without using the vulcanizing accelerator is desired.

Therefore, the present invention is to provide an immersion-molded body with excellent flexibility, tensile properties, and heat-aging resistance, even if a vulcanizing agent or vulcanizing accelerator is not used, and is obtained using a chloroprene-based block copolymer latex with excellent immersion-moldability.

### SOLUTION TO PROBLEM

The present invention is summarized as follows.
(1) An immersion-molded body, wherein:
   the immersion-molded body is obtained using a latex;
   the latex comprises a chloroprene-based block copolymer;
   the chloroprene-based block copolymer contains 5 to 30% by mass of a polymer block (A) and 70 to 95% by mass of a chloroprene-based polymer block (B);
   the polymer block (A) is derived from a monomer;
   when the monomer is polymerized alone, a polymer with a glass transition temperature of 80°C or higher can be obtained;
   the chloroprene-based polymer block (B) includes a chloroprene monomer unit; and
   when the immersion-molded body is heat-treated at 130°C for 30 minutes, a tensile strength at break of the heat-treated immersion-molded body measured in accordance with JIS K6251 is 17 MPa or more.
(2) The immersion-molded body of (1), wherein:
   the immersion-molded body is obtained using the latex;
   the latex comprises the chloroprene-based block copolymer;
   the chloroprene-based block copolymer contains 5 to 15% by mass of the polymer block (A) and 85 to 95% by mass of the chloroprene-based polymer block (B) with respect to 100% by mass of the chloroprene-based block copolymer.
(3) The immersion-molded body of (1) or (2), wherein the chloroprene-based polymer block (B) has the chloroprene monomer unit and a polyfunctional monomer unit.

### EFFECTS OF INVENTION

According to the present invention, an immersion-molded body with excellent flexibility, tensile properties, and heat-aging resistance, even if a vulcanizing agent or vulcanizing accelerator is not used, and is obtained using a chloroprene-based block copolymer latex with excellent immersion-moldability is provided.

### DESCRIPTION OF EMBODIMENTS

The following is a detailed description of the embodiment of the invention. In this specification and the claims, the description "A to B" means it is A or more and B or less.

### < Chloroprene-based Block Copolymer Latex >

The chloroprene-based block copolymer latex comprises a chloroprene-based block copolymer which contains 5 to 30% by mass of a polymer block (A) and 70 to 95% by mass of a chloroprene-based polymer block (B) containing a chloroprene monomer unit

### [Polymer Block (A)]

The polymer block (A) is derived from a monomer and when the monomer is polymerized alone, a polymer with a glass transition temperature of 80°C or higher can be obtained. The use of such a monomer improves the tensile strength at break and heat-aging resistance of the resulting immersion-molded film. Preferably, a monomer, which is polymerized alone to obtain a polymer with a glass transition temperature of 85°C or higher, may be used. From the viewpoint of immersion-moldability, a monomer, which is polymerized alone to obtain a polymer with a glass transition temperature of 150°C or less, is preferable and a monomer, which is polymerized alone to obtain a polymer with a glass transition temperature of 120°C or less, is especially preferable. The glass transition temperature may be, for example, 80, 85, 90, 95, 100, 105, 110, 120, 130, 140, 150°C, and may be within the range between any two of the numerical values exemplified here. In this specification, the glass transition temperature is an extrapolated end temperature of glass transition (Teg) measured in accordance with JIS K 7121. When the polymer block (A) is a polymer block obtained by polymerizing a monomer (A), the homopolymer (A) having a number average molecular weight of 10,000 to 30,000 obtained by homopolymerizing the monomer (A) preferably has the above glass transition temperature.

Examples of the monomer unit constituting the polymer block (A) include an aromatic vinyl monomer unit, a methyl methacrylate monomer unit, and an acrylonitrile monomer unit. A unit derived from an aromatic vinyl monomer is preferably used, and a styrene unit is preferably used. The polymer block (A) can be a polymer block obtained by copolymerization of these monomers, or a polymer block comprising a monomer unit copolymerizable with these monomers, as long as the object of the present invention is not impaired.

The number average molecular weight of the polymer block (A) is preferably 10,000 or more from the viewpoint of the tensile properties, heat-aging resistance, and moldability of the obtained immersion-molded film. The number average molecular weight of the polymer block (A) can be, for example, 10000, 15000, 20000, 25000, 30000, and may be within the range between the numerical values exemplified herein. In the present specification, the number average molecular weight and the weight average molecular weight are polystyrene-equivalent values measured by gel permeation chromatography (GPC) and are measured values under the measurement conditions described below.
Device: HLC-8320 (manufactured by Tosoh Corporation)
Column: 3 TSKgel GMHHR-H in series
Temperature: 40°C
Detection: differential refractometer
Solvent: tetrahydrofuran
Calibration curve: made using standard polystyrene (PS)

The molecular weight distribution of the polymer block (A) is preferably 2.0 or less from the viewpoint of moldability. The molecular weight distribution of the polymer block (A) may be, for example, 1.0, 1.1, 1.2, 1.3, 1.4, 1.5, 1.6, 1.7, 1.8, 1.9, 2.0 and may be within the range between the numerical values exemplified herein.

### [Chloroprene-based Polymer Block (B)]

The chloroprene-based polymer block (B) contains a chloroprene monomer (2-chloro-1,3-butadiene) unit and mainly contains a chloroprene monomer unit. The chloroprene-based polymer block (B) may include a polyfunctional monomer unit. The chloroprene-based polymer block (B) may be a polymer block comprising a chloroprene monomer unit, a polyfunctional monomer unit, and a unit derived from another monomer copolymerizable with them, as long as the object of the present invention is not impaired. When the chloroprene-based polymer block (B) is 100% by mass, the chloroprene-based polymer block (B) preferably contains 90% by mass or more of structural units derived from chloroprene monomer.

The content of each structural unit in the chloroprene-based polymer block (B) is not particularly limited. The content of the chloroprene monomer unit is preferably 90 to 99.95% by mass and the content of the polyfunctional monomer unit is 0.05 to 10% by mass. The content of the polyfunctional monomer unit in the chloroprene-based polymer block (B) is, for example, 0.05, 0.50, 1.00, 2.00, 3.00, 4.00, 5.00, 6.00, 7.00, 8.00, 9.00, 10.00% by mass, and may be in the range between the two values exemplified herein.

### [Polyfunctional monomer]

The polyfunctional monomer is used to improve the tensile properties and heat-aging resistance of the obtained immersion-molded film. The polyfunctional monomer is a compound having two or more radical polymerization groups in the molecule. From the viewpoints of the flexibility, tensile strength at break, and immersion-moldability of the obtained film by the immersion molding, the monomer represented by the formula (1) and the aromatic polyene monomer are preferably used. Examples of the monomer represented by the chemical formula (1) include 1.9-nonanediol dimethacrylate, 1.9-nonanediol diacrylate, neopentyl glycol dimethacrylate, neopentyl glycol diacrylate, 1.6-hexanediol dimethacrylate, 1.6-hexanediol diacrylate, ethylene glycol dimethacrylate, diethylene glycol dimethacrylate, triethylene glycol dimethacrylate, triethylene glycol diacrylate, polyethylene glycol dimethacrylate, polyethylene glycol diacrylate. The aromatic polyene monomer is an aromatic polyene having 10 or more and 30 or less carbon atoms, having a plurality of double bonds (vinyl groups) and a single or a plurality of aromatic groups. Examples of the aromatic polyene monomer unit include units derived from aromatic polyene monomer such as o-divinylbenzene, p-divinylbenzene, m-divinylbenzene, 1,4-divinylnaphthalene, 3,4-divinylnaphthalene, 2,6-divinylnaphthalene, 1,2-divinyl-3,4-dimethylbenzene, 1,3-divinyl-4,5,8-tributylnaphthalene, and any one or a mixture of two or more of the orthodivinylbenzene unit, the paradivinylbenzene unit and the metadivinylbenzene unit is preferably used.

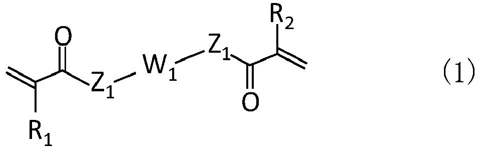

In the formula, R₁ and R₂ represent hydrogen, chlorine, a substituted or unsubstituted alkyl group, a substituted or unsubstituted alkenyl group, a substituted or unsubstituted aryl group, a mercapto group, or a substituted or unsubstituted heterocyclyl group. W₁ represents the structure including at least any one of a saturated or unsaturated hydrocarbon group, a saturated or unsaturated cyclic hydrocarbon group, a saturated or unsaturated hydrocarbon group containing a hetero atom, and a saturated or unsaturated cyclic hydrocarbon group containing a hetero atom. Z₁ represents oxygen, nitrogen, and sulfur.

The content of each structural unit in the chloroprene-based block copolymer is 5 to 30% by mass of the polymer block (A) and 70 to 95% by mass of the chloroprene-based polymer block (B), preferably 5 to 15% by mass of the polymer block (A) and 85 to 95% by mass of the chloroprene-based polymer block (B). When the polymer block (A) is 5% by mass or more, the tensile strength at break and heat-aging resistance of the obtained immersion-molded film and immersion-moldability are improved. When the polymer block (A) is 30% by mass or less, the flexibility of the obtained immersion-molded film is improved. The polymer block (A) is preferably 15% by mass or less. When the chloroprene-based polymer block (B) is 70% by mass or more, the flexibility of the immersion-molded film is improved. The chloroprene-based polymer block (B) is preferably 85% by mass or more. When the chloroprene-based polymer block (B) is 95% by mass or less, the tensile strength at break of the immersion-molded film and immersion-moldability are improved. When the chloroprene-based block copolymer is 100% by mass, the content of the polymer block (A) contained in the chloroprene-based block copolymer is, for example, 5, 10, 15, 20, 25, 30% by mass and may be in the range between the two values exemplified herein.

The chloroprene-based block copolymer according to one embodiment of the present invention may consist of the polymer block (A) and the polymer block (B), and may not contain other polymer blocks. The chloroprene-based block copolymer can be a diblock copolymer of the polymer block (A) and the polymer block (B).

The weight average molecular weight of the chloroprene-based block copolymer is not particularly limited, but from the viewpoint of moldability, it is preferably 50,000 to 600,000, and more preferably 100,000 to 500,000.

### [Immersion-molded body]

The immersion-molded body of the present embodiment is obtained by immersion molding the above-mentioned chloroprene-based block copolymer latex, has low modulus and flexibility, excellent mechanical properties such as tensile strength at break and elongation at break, excellent heat-aging resistance, and excellent immersion-moldability. The immersion-molded body is suitable for gloves, balloons, and catheters. The immersion-molded body according to one embodiment of the present invention can also be obtained by molding the chloroprene-based block copolymer latex composition containing the above-mentioned chloroprene-based block copolymer latex. The immersion-molded body according to one embodiment of the present invention can be obtained, as one example, by the method described in the Examples.

The molding method for producing the immersion-molded body of the present embodiment is, for example, a coagulation liquid immersion method, but it is not limited to this method, and it can be molded according to the usual methods.

When the immersion-molded body of the present embodiment is heat-treated at 130°C for 30 minutes, a tensile strength at break of the heat-treated immersion-molded body measured in accordance with JIS K6251 of the film is 17 MPa or more and an unvulcanized immersion-molded film containing no vulcanizing agent and no vulcanizing accelerator can be provided. The unvulcanized immersion-molded body has flexibility and exhibits sufficient mechanical strength even if containing no vulcanizing agent and no vulcanizing accelerator. The tensile strength at break is more preferably 18 MPa or more, further preferably 19 MPa or more, and even more preferably 20 MPa or more. The upper limit is not particularly limited, but is, for example, 30 MPa or less. When the immersion-molded body of the present embodiment is heat-treated at 30°C for 30 minutes, and then subjected to a heat-aging test at 100°C for 22 hours, the tensile strength at break measured according to JIS K 6251 is preferably 17 MPa or more, more preferably 18 MPa or more, further preferably 19 MPa or more, and even more preferably 20 MPa or more. preferable. The upper limit is not particularly limited, but is, for example, 30 MPa or less.

When the immersion-molded body of the present embodiment is heat-treated at 130°C for 30 minutes, an elongation at break of the heat-treated immersion-molded body measured in accordance with JIS K6251 is preferably 900% or more, more preferably 905% or more, and even more preferably 910% or more. The upper limit is not particularly limited, but is, for example, 1300% or less. When the immersion-molded body of the present embodiment is heat-treated at 30°C for 30 minutes, and then subjected to a heat-aging test at 100°C for 22 hours, an elongation at break measured in accordance with JIS K6251 is preferably 900% or more, more preferably 905% or more, and even more preferably 910% or more. The upper limit is not particularly limited, but is, for example, 1300% or less.

When the immersion-molded body of the present embodiment is heat-treated at 130°C for 30 minutes, a modulus at 500% in accordance with JIS K 6251 is preferably 3.0 MPa or less, more preferably 2.9 MPa or less, and even more preferably 2.8 MPa. The lower limit is not particularly limited, but is, for example, 1.0 MPa or higher. When the immersion-molded body of the present embodiment is heat-treated at 30°C for 30 minutes, and then subjected to a heat-aging test at 100°C for 22 hours, a modulus at 500% in accordance with JIS K 6251 is preferably 3.0 MPa or less, more preferably 2.9 MPa or less, and even more preferably 2.8 MPa or less. The lower limit is not particularly limited, but is, for example, 1.0 MPa or more.

The above immersion-molded body can be obtained by the method described in the Examples, and the immersion-molded body can be molded with no vulcanizing agent and no vulcanizing accelerator.

The tensile strength at break, elongation at break, and modulus at 500% elongation of the immersion-molded body can be adjusted by controlling the amount of the polyfunctional monomer added, the content of the polyfunctional monomer unit contained in the chloroprene-based polymer block (B), the content of the chloroprene-based polymer block (B) in the chloroprene-based block copolymer, or the type and amount of the functional group introduced by polymerizing in the presence of the RAFT agent described later.

The immersion-molded body of the present embodiment may contain a vulcanizing agent or a vulcanizing accelerator. When the immersion-molded body according to one embodiment contains a vulcanizing agent and/or a vulcanizing accelerator, the total content thereof can be 5% by mass or less, more preferably 1% by mass or less, and more preferably 0.1% by mass or less with respect to 100% by mass of the immersion-molded body. However, since the unvulcanized immersion-molded body has sufficient mechanical strength even if it does not contain a vulcanizing agent or a vulcanizing accelerator, it preferably contains no vulcanizing agent and no vulcanizing agent from the viewpoint of reducing allergies and costs.

Examples of the vulcanizing agent include sulfur, zinc oxide, and magnesium oxide.

The vulcanizing accelerator is an agent which is added when vulcanizing raw rubber in order to act with the vulcanizing agent to increase the speed of vulcanization, shorten the vulcanization time, lower the vulcanization temperature, reduce the amount of the vulcanizing agent, and improve the physical properties of vulcanized rubber. Usually, the vulcanizing accelerator refers to an agent that promotes a sulfur vulcanization reaction.

Examples of the vulcanizing accelerator generally used for the vulcanization of chloroprene-based copolymer latex include thiuram-based, dithiocarbamate-based, thiourea-based, guanidine-based, xanthogenate-based, thiazole-based and they can be used alone, or two or more of these can be used in combination.

The immersion-molded body of the present embodiment exhibits excellent mechanical properties regardless of whether or not it contains the vulcanizing agent and the vulcanizing accelerator. From the viewpoint of reducing allergies and costs, it preferably includes no vulcanizing agent and no vulcanizing accelerator.

As an antioxidant added to the immersion-molded body of the present embodiment, a primary antioxidant that captures radicals and prevents autoxidation, which is used in ordinary rubber applications, and a secondary antioxidant that renders hydroperoxide harmless can be added. The amount of these antioxidants added can be 0.1 part by mass or more and 10 parts by mass or less, preferably 2 parts by mass and 5 parts by mass or less, with respect to 100 parts by mass of the rubber component in the latex compposition. These antioxidants can be used alone, or two or more of these can be used in combination. Examples of the primary antioxidant may include phenol-based antioxidants, amine-based antioxidants, acrylate-based antioxidants, imidazole-based antioxidants, carbamic acid metal salts, and waxes. In addition, examples of the secondary antioxidant may include phosphorus-based antioxidants, sulfur-based antioxidants, and imidazole-based antioxidants. Examples of the antioxidant are not particularly limited and may include N-phenyl-1-naphthylamine, alkylated diphenylamine, octylated diphenylamine, 4,4'-bis (α, α-dimethylbenzyl) diphenylamine, p-(p-toluenesulfonylamide) diphenylamine, N, N'-di-2-naphthyl-p-phenylenediamine, N, N'-diphenyl-p-phenylenediamine, N-phenyl-N'-isopropyl-p-phenylenediamine, N-phenyl-N'-(1,3-dimethylbutyl)-p-phenylenediamine, N-phenyl-N'-(3-methacryloyloxy-2-hydroxypropyl)-p-phenylenediamine, 1,1,3 -tris-(2-methyl-4-hydroxy-5 -t-butylphenyl) butane, 4,4'-butylidenebis-(3 -methyl-6-t-butylphenol), 2,2-thiobis (4-methyl-6-t-butylphenol), 7-octadecyl-3-(4'-hydroxy-3', 5'-di-t-butylphenyl) propionate, tetrakis-[methylene-3-(3', 5'-di-t-butyl-4'-hydroxyphenyl) propionate] methane, pentaerythritol-tetrakis [3-(3,5-di-t-butyl-4-hydroxyphenyl) propionate], triethylene glycol-bis [3 -(3 -t-butyl-5 -methyl-4-hydroxyphenyl) propionate], 1,6-hexanediol-bis [3-(3,5-di-t-butyl-4-hydroxyphenyl) propionate], 2,4-bis (n-octylthio)-6-(4-hydroxy-3,5-di-t-butylanilino)-1,3,5-triazine, tris3,5-di-t-butyl-4-hydroxybenzyl)-isocyanurate, 2,2-thio-diethylene bis [3-(3,5-di-t-butyl-4-hydroxyphenyl) propionate], N, N'-hexamethylenebis (3,5-di-t-butyl-4-hydroxy)-hydrocinnaamide, 2,4-bis [(octylthio) methyl]-o-cresol, 3,5-di-t-butyl-4-hydroxybenzyl-phosphonate-diethyl ester, tetrakis [methylene (3,5 -di-t-butyl-4-hydroxyhydrocinnamate)] methane, octadecyl-3 -(3,5 -di-t-butyl-4-hydroxyphenyl) propionic acid ester, 3,9-bis [2-{3-(3-t-butyl-4-hydroxy-5-methylphenyl) propionyloxy}-1,1-dimethylethyl]-2,4,8,10-tetraoxaspiro [5.5] undecane, tris (nonyl phenyl) phosphite, tris (mixed mono- and di-nonylphenyl) phosphite, diphenyl mono (2-ethylhexyl) phosphite, diphenyl monotridecyl phosphite, diphenyl isodecyl phosphite, diphenyl isooctyl phosphite, diphenyl nonylphenyl phosphite, triphenylphosphite, tris (tridecyl) phosphite, triisodecylphosphite, tris (2-ethylhexyl) phosphite, tris (2,4-di-t-butylphenyl) phosphite, tetraphenyldipropylene glycol diphosphite, tetraphenyltetra (tridecylic) pentaerythritol tetraphosphite, 1,1,3-tris (2-methyl-4-di-tridecylphosphite-5-t-butylphenyl) butane, 4,4'-butylidenebis-(3-methyl-6-t-butyl-di-tridecylphosphite), 2,2'-etilidenebis (4,6-di-t-butylphenol) fluorophosphite, 4,4'-isopropylidene-diphenolalkyl (C12-C15) phosphite, cyclic neopentane tetraylbis (2,4-di-t-butylphenylphosphite), cyclic neopentane tetraylbis (2,6-di-t-butyl-4-phenylphosphite), cyclic neopentane tetraylbis (nonylphenylphosphite), bis (nonylphenyl) pentaerythritol diphosphite, dibutyl hydrogen phosphite, distearyl pentaerythritol diphosphite and hydrogenated bisphenol A pentaerythritol phosphite polymer, 2-mercaptobenzimidazole, butylation reaction products of p-cresol and dicyclopentadiene.

### [Method of Producing Chloroprene-based Block Copolymer]

A method for producing the chloroprene-based block copolymer latex according to the present invention will be described. The producing method is not particularly limited as long as the desired chloroprene-based block copolymer latex can be obtained. It can be produced by a two-step polymerization step comprising emulsion polymerization step 1 to synthesize the polymer block (A) and subsequent polymerization step 2 to synthesize the chloroprene-based polymer block (B) to obtain the chloroprene-based block copolymer latex.

### (Polymerization Step 1)

Polymerization step 1 will be explained in detail. In polymerization step 1, the polymer block (A) is synthesized by living radical polymerization of monomer constituting the polymer block (A). As described above, the polymer block (A) obtained here preferably has the glass transition temperature described above. The emulsifier used in the polymerization is not particularly limited, but an anion-based or nonionic-based emulsifier is preferable from the viewpoint of stability. It is preferable to use an alkali metal rosinate because the immersion-molded body using the resulting chloroprene-based block copolymer latex can have appropriate strength to prevent excessive shrinkage and breakage. The concentration of the emulsifier is preferably 5 to 50% by mass with respect to 100% by mass of the monomer constituting the polymer block (A) from the viewpoint of efficiently performing the polymerization reaction. As the radical polymerization initiator, a known radical polymerization initiator can be used, and for example, potassium persulfate, benzoyl peroxide, hydrogen peroxide, an azo compound, and the like can be used. The amount of pure water added is preferably 100 to 300% by mass with respect to 100% by mass of the monomer constituting the polymer block (A). When the amount of pure water added is 300% by mass or less, the tensile strength at brake of the obtained immersion-molded film is improved. The polymerization temperature may be appropriately determined depending on the type of the monomer, but is preferably 10 to 100°C, more preferably 20 to 80°C.

### (Polymerization Step 2)

In the polymerization step 2, pure water, an emulsifier, chloroprene monomer, and polyfunctional monomer are added to the latex containing the polymer block (A) obtained by the living radical polymerization in the polymerization step 1, and polymerization is performed to obtain the chloroprene-based block copolymer latex. The chloroprene monomer may be added all at once or added in a plurality of times. The polymerization temperature in the polymerization step 2 is preferably 10 to 50°C from the viewpoint of ease of polymerization control. The polymerization reaction is stopped by adding a polymerization inhibitor. Examples of the polymerization inhibitor include thiodiphenylamine, 4-tert-butylpyrocatechol, 2,2'-methylenebis(4-methyl-6-tert-butylphenol) and the like. After the completion of the polymerization, the unreacted monomer can be removed by a conventional method such as vacuum distillation.

To the chloroprene-based block copolymer latex obtained in the polymerization step 2, a freeze stabilizer, an emulsion stabilizer, a viscosity modifier, an antioxidant, and a preservative can be optionally added after the polymerization, as long as the object of the present invention is not impaired.

The chloroprene-based block copolymer preferably has a functional group of the structure represented by the following formula (2) or (3). 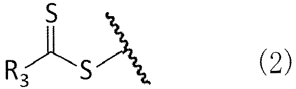 In the formula (2), R₃ represents hydrogen, chlorine, a substituted or unsubstituted alkyl group, a substituted or unsubstituted alkenyl group, a substituted or unsubstituted aryl group, a mercapto group or a substituted or unsubstituted heterocyclyl group.

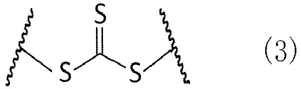

The terminal structure represented by the above formula (2) or formula (3) is introduced into the block copolymer by performing polymerization in the presence of a known RAFT agent. The compound that derives the structure represented by above formula (2) is not particularly limited, and a general compound can be used. Examples thereof include dithiocarbamates and dithioesters. Specifically, benzyl1-pyrrolecarbodithioate (common name: benzyl1-pyrroldithiocarbamate), benzylphenylcarbodithioate, 1-benzyl-N, N-dimethyl-4-aminodithiobenzoate, 1-benzyl-4-methoxydithiobenzoate, 1-phenylethylimidazole carbodithioate (common name: 1-phenylethylimidazole dithiocarbamate), benzyl-1-(2-pyrrolidinone) carbodithioate, (common name: benzyl-1-(2-pyrrolidinone) dithiocarbamate), benzylphthalimidylcarbodithioate, (common name: benzylphthalimidyl dithiocarbamate), 2-cyanoprop-2-yl-1-pyrrolecarbodithioate, (common name: 2-cyanoprop-2-yl-1-pyrroledithiocarbatnate), 2-cyanobut-2-yl-1-pyrrolecarbodithioate, (common name: 2-cyanobut-2-yl-1-pyrrole dithiocarbamate), benzyl-1-imidazole carbodithioate, (common name: benzyl-1-imidazole dithiocarbamate), 2-cyanoprop-2-yl-N, N-dimethyldithiocarbamate, benzyl-N, N-diethyldithiocarbamate, cyanomethyl-1-(2-pyrrolidone) dithiocarbamate, 2-(ethoxycarbonylbenzyl) prop-2-yl-N, N-diethyldithiocarbamate, 1-phenylethyldithiobenzoate, 2-phenylprop-2-yldithiobenzoate, 1-acetic acid-1-yl-ethyldithiobenzoate, 1-(4-methoxyphenyl) ethyldithiobenzoate, benzyldithioacetate, ethoxycarbonylmethyldithioacetate, 2-(ethoxycarbonyl) prop-2-yldithiobenzoate, 2-cyanoprop-2-yldithiobenzoate, tert-butyldithiobenzoate, 2,4,4-trimethylpenta-2-yldithiobenzoate, 2-(4-chlorophenyl)-prop-2-yldithiobenzoate, 3 -vinylbenzyldithiobenzoate, 4-vinylbenzyldithiobenzoate, benzyldiethoxyphosphinyldithioformate, tert-butyltrithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzylsulfanylbutyric acid, dibenzyltetrathioterephthalate, carboxymethyldithiobenzoate, poly (ethylene oxide) with a dithiobenzoate terminal group, poly (ethylene oxide) with 4-cyano-4-methyl-4-thiobenzylsulfanylbutyric acid terminal group, 2-[(2-phenylethanethioyl)sulfanyl] propanoic acid, 2-[(2-phenylethanethioyl) sulfanyl] succinic acid, 3,5-dimethyl-1H-pyrazole-1-carbodithioate potassium, cyanomethyl-3,5-dimethyl-1H-pyrazole-1-carbodithioate, cyanomethylmethylphenyl) dithiocarbamate, benzyl-4-chlorodithiobenzoate, phenylmethyl-4-chlorodithiobenzoate, 4-nitrobenzyl-4-chlorodithiobenzoate, phenylprop-2-yl-4-chlorodithiobenzoate, 1-cyano-1-methylethyl-4-chlorodithiobenzoate, 3-chloro-2-butenyl-4-chlorodithiobenzoate, 2-chloro-2-butenyldithiobenzoate, benzyldithioacetate, 3-chloro-2-butenyl-1H-pyrrole-1-dithiocarboxylic acid, 2-cyanobutane-2-yl 4-chloro-3,5-dimethyl-1H-pyrazole-1-carbodithioate and cyanomethylmethyl (phenyl) carbamodithioate. Of these, benzyl1-pyrrole carbodithioate and benzylphenylcarbodithioate are particularly preferable. The compound that derives the structure represented by the above formula (3) is not particularly limited, and a general compound can be used. For example, trithiocarbonates such as 2-cyano-2-propyldodecyltrithiocarbonate, dibenzyltrithiocarbonate, butylbenzyltrithiocarbonate, 2-[[(butylthio) thioxomethyl] thio] propionic acid, 2-[[(dodecylthio) thioxomethyl] thio] propionic acid, 2-[[(butylthio) thioxomethyl] thio] succinic acid, 2-[[(dodecylthio) thioxomethyl] thio] succinic acid, 2-[[(dodecylthio) thioxomethyl] thio]-2-methylpropionic acid, 2,2'-[carbonothioylbis (thio)] bis [2-methylpropionic acid], 2-amino-1-methyl-2-oxoethylbutyltrithiocarbonate, benzyl2-[(2-hydroxyethyl) amino]-1-methyl-2-oxoethyltrithiocarbonate, 3-[[[(tert-butyl) thio] thioxomethyl] thio] propionic acid, cyanomethyldodecyltrithiocarbonate, diethylaminobenzyltrithiocarbonate, and dibutylaminobenzyltrithiocarbonate can be mentioned. Of these, dibenzyltrithiocarbonate and butylbenzyltrithiocarbonate are particularly preferably used.

### EXAMPLES

Hereinafter, the present invention will be described with reference to Examples and Comparative Examples, but these are merely exemplary and do not limit the content of the present invention.

### (Example 1)

### (Polymerization Step 1) Synthesis of polymer block (A-1)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The sampled latex was mixed with a large amount of methanol to precipitate a resin component and the precipitate was filtered and dried to obtain a sample of the polymer block (A-1). By analyzing the obtained sample, the number average molecular weight, molecular weight distribution, and glass transition temperature of the polymer block (A) were determined. The analysis results are shown in Table 1. The methods for measuring the "number average molecular weight", "molecular weight distribution", and "glass transition temperature" will be described later.

### (Polymerization Step 2) Synthesis of chloroprene-based polymer block (B-1)

After the polymerization step 1, when the internal temperature dropped to 45°C, 4480 g of chloroprene monomer and 91.4 g of 1.9-nonanediol dimethacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation.

The sampled latex was mixed with a large amount of methanol to precipitate the resin component and the precipitate was filtered and dried to obtain a sample of the chloroprene-based block copolymer. By analyzing the obtained sample, the content (mass %) of the polymer block (A-1) and the chloroprene-based polymer block (B-1) in the chloroprene-based block copolymer were determined. The analysis results are shown in Table 1. The measurement method is described below.

### (Example 2)

### (Polymerization Step 1) Synthesis of polymer block (A-2)

Polymerization was carried out using an autoclave with a capacity of 10 L and a stirrer and a jacket for heating and cooling. 3333 g of pure water, 160 g of disproportionated potassium rosinate (manufactured by Harima Chemicals Group, Inc.), 26.0 g of potassium hydroxide, 13.3 g of sodium salt of β-naphthalene sulfonic acid formalin condensate (manufactured by Kao Corporation, product name: DEMOL N), 250 g of styrene monomer and 4.33 g of butylbenzyl trithiocarbonate were charged, the internal temperature was set to 80°C, and the mixture was stirred under a nitrogen stream at 200 rpm. By adding 2.73 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-2) were determined by analysis in the same manner as in Example 1. The analysis results are shown in Table 1.

### (Polymerization Step 2) Synthesis of chloroprene-based polymer block (B-2)

After the polymerization step 1, when the internal temperature dropped to 45°C, 5584 g of chloroprene monomer and 114.0 g of 1.9-nonanediol dimethacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-2) and the chloroprene-based polymer block (B -2) in the chloroprene-based block copolymer were determined by analysis as in Example 1. The analysis results are shown in Table 1.

### (Example 3)

### (Polymerization Step 1) Synthesis of polymer block (A-3)

Polymerization was carried out using an autoclave with a capacity of 10 L and a stirrer and a jacket for heating and cooling. 5733 g of pure water, 275 g of disproportionated potassium rosinate (manufactured by Harima Chemicals Group, Inc.), 44.7 g of potassium hydroxide, 22.9 g of sodium salt of β-naphthalene sulfonic acid formalin condensate (manufactured by Kao Corporation, product name: DEMOL N), 430 g of styrene monomer and 7.45 g of butylbenzyl trithiocarbonate were charged, the internal temperature was set to 80°C, and the mixture was stirred under a nitrogen stream at 200 rpm. By adding 4.69 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-3) were determined by analysis in the same manner as in Example 1. The analysis results are shown in Table 1.

### (Polymerization Step 2) Synthesis of chloroprene-based polymer block (B-3)

After the polymerization step 1, when the internal temperature dropped to 45°C, 3094 g of chloroprene monomer and 63.1 g of 1.9-nonanediol dimethacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-3) and the chloroprene-based polymer block (B-3) in the chloroprene-based block copolymer were determined by analysis in the same manner as Example 1. The analysis results are shown in Table 1.

### (Example 4)

### (Polymerization Step 1) Synthesis of polymer block (A-4)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-4) were determined by analysis in the same manner as in Example 1. The analysis results are shown in Table 1.

### (Polymerization Step 2) Synthesis of chloroprene-based polymer block (B-4)

After the polymerization step 1, when the internal temperature dropped to 45°C, 4480 g of chloroprene monomer and 91.4 g of 1.9-nonanediol diacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-4) and the chloroprene-based polymer block (B-4) in the chloroprene-based block copolymer were determined by analysis in the same manner as Example 1. The analysis results are shown in Table 1.

### (Example 5)

### (Polymerization Step 1) Synthesis of polymer block (A-5)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-5) were determined by analysis in the same manner as in Example 1. The analysis results are shown in Table 1.

### (Polymerization Step 2) Synthesis of chloroprene-based polymer block (B-5)

After the polymerization step 1, when the internal temperature dropped to 45°C, 4480 g of chloroprene monomer and 91.4 g of LIGHT ESTER EG (manufactured by kyoeisha Chemical Co.,Ltd.), which is ethylene glycol diacrylate, were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The a content (mass %) of the polymer block (A-5) and the chloroprene-based polymer block (B-5) in the chloroprene-based block copolymer were determined by analysis in the same manner as Example 1. The analysis results are shown in Table 1.

### (Example 6)

### (Polymerization Step 1) Synthesis of polymer block (A-6)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-6) were determined by analysis in the same manner as in Example 1. The analysis results are shown in Table 1.

### (Polymerization Step 2) Synthesis of chloroprene-based polymer block (B-6)

After the polymerization step 1, when the internal temperature dropped to 45°C, 4480 g of chloroprene monomer and 93.3 g of divinylbenzene were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content of the polymer block (A-6) and the chloroprene-based polymer block (B-6) in the chloroprene-based block copolymer were determined by analysis in the same manner as Example 1. The analysis results are shown in Table 1.

### (Example 7)

### (Polymerization Step 1) Synthesis of polymer block (A-7)

Polymerization was carried out using an autoclave with a capacity of 10 L and a stirrer and a jacket for heating and cooling. 5450 g of pure water, 262 g of disproportionated potassium rosinate (manufactured by Harima Chemicals Group, Inc.), 42.5 g of potassium hydroxide, 21.8 g of sodium salt of β-naphthalene sulfonic acid formalin condensate (manufactured by Kao Corporation, product name: DEMOL N), 2500 g of styrene monomer and 43.3 g of butylbenzyl trithiocarbonate were charged, the internal temperature was set to 80°C, and the mixture was stirred under a nitrogen stream at 200 rpm. By adding 27.3 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-7) were determined by analysis in the same manner as in Example 1. The analysis results are shown in Table 1.

### (Polymerization Step 2) Synthesis of chloroprene-based polymer block (B-7)

Polymerization was carried out using an autoclave with a capacity of 10 L and a stirrer and a jacket for heating and cooling. 2732 g of pure water, 131 g of disproportionated potassium rosinate (manufactured by Harima Chemicals Group, Inc.), 21.3 g of potassium hydroxide, 10.9 g of sodium salt of β-naphthalene sulfonic acid formalin condensate (manufactured by Kao Corporation, product name: DEMOL N), and 783 g of the latex containing polymer block (A-7) produced in polymerization step 1 were charged, the internal temperature was set to 45°C, and the mixture was stirred under a nitrogen stream at 200 rpm. Then, 3000 g of chloroprene monomer was slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-7) and the chloroprene-based polymer block (B-7) in the chloroprene-based block copolymer were determined by analysis as in Example 1. The analysis results are shown in Table 1.

### (Example 8)

### (Polymerization Step 1) Synthesis of polymer block (A-8)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-8) were determined by analysis in the same manner as in Example 1. The analysis results are shown in Table 1.

### (Polymerization Step 2) Synthesis of chloroprene-based polymer block (B-8)

After the polymerization step 1, when the internal temperature dropped to 45°C, 4480 g of chloroprene monomer and 91.4 g of triallyl isocyanurate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-8) and the chloroprene-based polymer block (B-8) in the chloroprene-based block copolymer were determined by analysis in the same manner as Example 1. The analysis results are shown in Table 1.

### (Example 9)

### (Polymerization Step 1) Synthesis of polymer block (A-9)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-9) were determined by analysis in the same manner as in Example 1. The analysis results are shown in Table 1.

### (Polymerization Step 2) Synthesis of chloroprene-based polymer block (B-9)

After the polymerization step 1, when the internal temperature dropped to 45°C, 4480 g of chloroprene monomer and 91.4 g of hydroxypyvalypivlate diacrylate (manufactured by kyoeisha Chemical Co., Ltd.) were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-9) and the chloroprene-based polymer block (B-9) in the chloroprene-based block copolymer were determined by analysis in the same manner as Example 1. The analysis results are shown in Table 1.

### (Example 10)

### (Polymerization Step 1) Synthesis of polymer block (A-10)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The number average molecular weight, molecular weight distribution, and glass transition temperature of the polymer block (A-10) were determined by analysis in the same manner as in Example 1. The analysis results are shown in Table 1.

### (Polymerization Step 2) Synthesis of chloroprene-based polymer block (B-10)

After the polymerization step 1, when the internal temperature dropped to 45°C, 4480 g of chloroprene monomer and 91.4 g of trimethylolpropane triacrylate (manufactured by kyoeisha Chemical Co.,Ltd.) were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-10) and the chloroprene-based polymer block (B-10) in the chloroprene-based block copolymer were determined by analysis in the same manner as Example 1. The analysis results are shown in Table 1.

### (Example 11)

### (Polymerization Step 1) Synthesis of polymer block (A-11)

Polymerization was carried out using an autoclave with a capacity of 10 L and a stirrer and a jacket for heating and cooling. 6667 g of pure water, 320 g of disproportionated potassium rosinate (manufactured by Harima Chemicals Group, Inc.), 52.0 g of potassium hydroxide, 26.7 g of sodium salt of β-naphthalene sulfonic acid formalin condensate (manufactured by Kao Corporation, product name: DEMOL N), 500 g of styrene monomer and 6.50 g of butylbenzyl trithiocarbonate were charged, the internal temperature was set to 80°C, and the mixture was stirred under a nitrogen stream at 200 rpm. By adding 4.09 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-11) were determined by analysis in the same manner as in Example 1. The analysis results are shown in Table 1.

### (Polymerization Step 2) Synthesis of chloroprene-based polymer block (B-11)

After the polymerization step 1, when the internal temperature dropped to 45°C, 1607 g of chloroprene monomer and 32.8 g of 1.9-nonanediol dimethacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content of the polymer block (A-11) and the chloroprene-based polymer block (B-11) in the chloroprene-based block copolymer were determined by analysis in the same manner as Example 1. The analysis results are shown in Table 1.

### (Example 12)

### (Polymerization Step 1) Synthesis of polymer block (A-12)

Polymerization was carried out using an autoclave with a capacity of 10 L and a stirrer and a jacket for heating and cooling. 5450 g of pure water, 262 g of disproportionated potassium rosinate (manufactured by Harima Chemicals Group, Inc.), 42.5 g of potassium hydroxide, 21.8 g of sodium salt of β-naphthalene sulfonic acid formalin condensate (manufactured by Kao Corporation, product name: DEMOL N), 2500 g of styrene monomer and 32.5 g of butylbenzyl trithiocarbonate were charged, the internal temperature was set to 80°C, and the mixture was stirred under a nitrogen stream at 200 rpm. By adding 20.5 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-12) were determined by analysis in the same manner as in Example 1. The analysis results are shown in Table 1.

### (Polymerization Step 2) Synthesis of chloroprene-based polymer block (B-12)

Polymerization was carried out using an autoclave with a capacity of 10 L and a stirrer and a jacket for heating and cooling. 1188 g of pure water, 57 g of disproportionated potassium rosinate (manufactured by Harima Chemicals Group, Inc.), 9.3 g of potassium hydroxide, 4.8 g of sodium salt of β-naphthalene sulfonic acid formalin condensate (manufactured by Kao Corporation, product name: DEMOL N), and 3147 g of the latex containing polymer block (A-12) made in polymerization step 1 were charged, the internal temperature was set to 45°C, and the mixture was stirred under a nitrogen stream at 200 rpm. Then, 3000 g of chloroprene monomer was slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-12) and the chloroprene-based polymer block (B-12) in the chloroprene-based block copolymer were determined by analysis as in Example 1. The analysis results are shown in Table 1.

### (Example 13)

### (Polymerization Step 1) Synthesis of polymer block (A-13)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of methyl methacrylate monomer and 4.14 g of butyl-2-cyanoisopropyltrithiocarbonate were charged, the internal temperature was set to 80°C, and the mixture was stirred under a nitrogen stream at 200 rpm. By adding 2.87 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-13) were determined by analysis in the same manner as in Example 1. The analysis results are shown in Table 1.

### (Polymerization Step 2) Synthesis of chloroprene-based polymer block (B-13)

After the polymerization step 1, when the internal temperature dropped to 45°C, 4424 g of chloroprene monomer and 90.3 g of 1.9-nonanediol dimethacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-13) and the chloroprene-based polymer block (B-13) in the chloroprene-based block copolymer were determined by analysis in the same manner as Example 1. The analysis results are shown in Table 1.

### (Comparative Example 1)

### (Polymerization Step 1) Synthesis of polymer block (A-14)

Polymerization was carried out using an autoclave with a capacity of 10 L and a stirrer and a jacket for heating and cooling. 3067 g of pure water, 147 g of disproportionated potassium rosinate (manufactured by Harima Chemicals Group, Inc.), 23.9 g of potassium hydroxide, 12.3 g of sodium salt of β-naphthalene sulfonic acid formalin condensate (manufactured by Kao Corporation, product name: DEMOL N), 230 g of styrene monomer and 3.99 g of butylbenzyl trithiocarbonate were charged, the internal temperature was set to 80°C, and the mixture was stirred under a nitrogen stream at 200 rpm. By adding 2.51 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-14) were determined by analysis in the same manner as in Example 1. The analysis results are shown in Table 1.

### (Polymerization Step 2) Synthesis of chloroprene-based polymer block (B-14)

After the polymerization step 1, when the internal temperature dropped to 45°C, 7278 g of chloroprene monomer and 148.5 g of 1.9-nonanediol dimethacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The the content (mass %) of the polymer block (A-14) and the chloroprene-based polymer block (B-14) in the chloroprene-based block copolymer were determined by analysis in the same manner as Example 1. The analysis results are shown in Table 1.

### (Comparative Example 2)

### (Polymerization Step 1) Synthesis of polymer block (A-15)

Polymerization was carried out using an autoclave with a capacity of 10 L and a stirrer and a jacket for heating and cooling. 6667 g of pure water, 320 g of disproportionated potassium rosinate (manufactured by Harima Chemicals Group, Inc.), 52.0 g of potassium hydroxide, 26.7 g of sodium salt of β-naphthalene sulfonic acid formalin condensate (manufactured by Kao Corporation, product name: DEMOL N), 500 g of styrene monomer and 4.27 g of butylbenzyl trithiocarbonate were charged, the internal temperature was set to 80°C, and the mixture was stirred under a nitrogen stream at 200 rpm. By adding 2.69 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-15) were determined by analysis in the same manner as in Example 1. The analysis results are shown in Table 1.

### (Polymerization Step 2) Synthesis of chloroprene-based polymer block (B-15)

After the polymerization step 1, when the internal temperature dropped to 45°C, 1607 g of chloroprene monomer and 32.8 g of 1.9-nonanediol dimethacrylate were slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-15) and the chloroprene-based polymer block (B-15) in the chloroprene-based block copolymer were determined by analysis in the same manner as Example 1. The analysis results are shown in Table 1.

### (Comparative Example 3)

### Synthesis of copolymer of chloroprene-based polymer block (B-16) only

Polymerization was carried out using an autoclave with a capacity of 10 L and a stirrer and a jacket for heating and cooling. 3600 g of pure water, 175 g of disproportionated potassium rosinate (manufactured by Harima Chemicals Group, Inc.), 28.4 g of potassium hydroxide, 16.0 g of sodium salt of β-naphthalene sulfonic acid formalin condensate (manufactured by Kao Corporation, product name: DEMOL N) , 4000 g of chloroprene monomer, 81.6 g of 1.9-nonanediol dimethacrylate and 4.72 g of butylbenzyl trithiocarbonate were charged, the internal temperature was set to 45°C, and the mixture was stirred under a nitrogen stream at 200 rpm. By adding 2.96 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. When the polymerization rate of the chloroprene monomer reaches 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation.

### (Comparative Example 4)

### (Polymerization step 1) Synthesis of polymer block (A-17)

Polymerization was carried out using an autoclave with a capacity of 10 L and a stirrer and a jacket for heating and cooling. 4616 g of pure water, 206 g of disproportionated potassium rosinate (manufactured by Harima Chemicals Group, Inc.), 2.3 g of potassium hydroxide, 46.2 g of sodium salt of β-naphthalene sulfonic acid formalin condensate (manufactured by Kao Corporation, product name: DEMOL N), 462 g of styrene monomer and 9.2 g of butylbenzyl trithiocarbonate were charged, the internal temperature was set to 80°C, and the mixture was stirred at 200 rpm under a nitrogen stream. By adding 6.0 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-17) were determined by analysis in the same manner as in Example 1. The analysis results are shown in Table 1.

### (Polymerization Step 2) Synthesis of chloroprene-based polymer block (B-17)

After the polymerization step 1, when the internal temperature dropped to 45°C, 4154 g of chloroprene monomer was slowly added over 2 hours to carry out the polymerization. When the polymerization rate of the chloroprene monomer reaches 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-17) and the chloroprene-based polymer block (B-17) in the chloroprene-based block copolymer were determined by analysis in the same manner as in Example 1. The analysis results are shown in Table 1.

### (Comparative Example 5)

### (Polymerization Step 1) Synthesis of polymer block (A-18)

Polymerization was carried out using an autoclave with a capacity of 10 L and a stirrer and a jacket for heating and cooling. 4616 g of pure water, 206 g of disproportionated potassium rosinate (manufactured by Harima Chemicals Group, Inc.), 2.3 g of potassium hydroxide, 46.2 g of sodium salt of β-naphthalene sulfonic acid formalin condensate (manufactured by Kao Corporation, product name: DEMOL N), 692 g of styrene monomer and 9.2 g of butylbenzyl trithiocarbonate were charged, the internal temperature was set to 80°C, and the mixture was stirred under a nitrogen stream at 200 rpm. By adding 6.0 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-18) were determined by analysis in the same manner as in Example 1. The analysis results are shown in Table 1.

### (Polymerization Step 2) Synthesis of chloroprene-based polymer block (B-18)

After the polymerization step 1, when the internal temperature dropped to 45°C, 3924 g of chloroprene monomer was slowly added over 2 hours and polymerization was carried out. When the polymerization rate of the chloroprene monomer reached 80%, the polymerization was stopped by adding a 10% by weight aqueous solution of N, N-diethylhydroxylamine, which is a polymerization inhibitor, and the unreacted chloroprene monomer was removed by vacuum distillation. For the measurement of physical properties, 20 ml of the obtained latex was sampled, and the remaining latex was used to prepare a film for evaluation. The content (mass %) of the polymer block (A-18) and the chloroprene-based polymer block (B-18) in the chloroprene-based block copolymer were determined by analysis in the same manner as Example 1. The analysis results are shown in Table 1.

### (Comparative Example 6)

### Synthesis of triblock copolymer

### (Synthesis of First Block)

Polymerization was carried out using an autoclave with a capacity of 10 L and a stirrer and a jacket for heating and cooling. 4613 g of pure water, 204.4 g of disproportionated potassium rosinate (manufactured by Harima Chemicals Group, Inc.), 2.3 g of potassium hydroxide, 46 .1 g of sodium salt of β-naphthalene sulfonic acid formalin condensate (manufactured by Kao Corporation, product name: DEMOL N), 230 g of styrene monomer and 9.2 g of benzyl 1-pyrrolecarbodithioate were charged, the internal temperature was set to 80°C, and the mixture was stirred under a nitrogen stream at 200 rpm. By adding 6.0 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the next polymerization step. The number average molecular weight, molecular weight distribution, and glass transition temperature of the first block were determined by analysis in the same manner as in Example 1. The analysis results are shown in Table 2.

### (Synthesis of Second Block)

After the synthesis of the first block, when the internal temperature dropped to 45°C, 4424 g of chloroprene monomer was added and polymerization was carried out. When the polymerization rate of the chloroprene monomer reaches 80%, the polymerization was stopped by adding a 10% by weight aqueous solution of N, N-diethylhydroxylamine, which is a polymerization inhibitor, and the unreacted chloroprene monomer was removed by vacuum distillation. The obtained latex was used in the next polymerization step.

### (Synthesis of third Block)

After the synthesis of the second block, the internal temperature was raised to 80°C, 230 g of styrene monomer was charged, and by adding 6.0 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. After the polymerization was carried out, it was cooled to 25°C to terminate the polymerization. For the measurement of physical properties, 20 ml of the obtained latex was sampled, and the remaining latex was used to prepare a film for evaluation. The contents (mass %) of styrene block, which is the first block and the third block, and chloroprene block, which is the second block, in the synthesized triblock copolymer were determined by analysis in the same manner as in Example 1. The analysis results are shown in Table 2.

### (Comparative Example 7)

### Preparation of mixture of homopolymer of polymer block (A) and homopolymer of chloroprene-based polymer block (B)

### (Synthesis of Homopolymer of Polymer Block (A))

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. When the polymerization rate of the styrene monomer reached 95%, the polymerization was stopped by adding a 10% by weight aqueous solution of N, N-diethylhydroxylamine, which is a polymerization inhibitor. For the measurement of physical properties, 20 ml of the obtained latex was sampled. The number average molecular weight, molecular weight distribution, and glass transition temperature of the homopolymer of the polymer block (A) were determined by analysis in the same manner as in Example 1. The analysis results are shown in Table 3.

### (Synthesis of Homopolymer of Chloroprene-based Polymer Block (B))

Polymerization was carried out using an autoclave with a capacity of 10 L and a stirrer and a jacket for heating and cooling. 3960 g of pure water, 193 g of disproportionated potassium rosinate (manufactured by Harima Chemicals Group, Inc.), 31.2 g of potassium hydroxide, 17.6 g of sodium salt of β-naphthalene sulfonic acid formalin condensate (manufactured by Kao Corporation, product name: DEMOL N), 4400 g of chloroprene monomer, 89.8 g of 1.9-nonanediol dimethacrylate, and 5.19 g of butylbenzyltrithiocarbonate were charged, the internal temperature was set to 45°C, and the mixture was stirred at 200 rpm under a nitrogen stream. By adding 3.26 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. When the polymerization rate of the chloroprene monomer reaches 80%, the polymerization was stopped by adding a 10% by weight aqueous solution of N, N-diethylhydroxylamine, which is a polymerization inhibitor, and the unreacted chloroprene monomer was removed by vacuum distillation.

### (Mixing of Homopolymer Latex of Polymer Block (A) and Homopolymer Latex of Chloroprene-based Polymer Block (B))

4000 g of the obtained latex of homopolymer of the polymer block (A) and 4000 g of the latex of the homopolymer of the chloroprene-based polymer block (B) were charged into an autoclave having a capacity of 10 L, a stirrer and a jacket for heating and cooling, and the internal temperature was adjusted to 45°C and the mixture was stirred at 200 rpm. For the measurement of physical properties, 20 ml of the obtained latex was sampled, and the remaining latex was used to prepare a film for evaluation. The content (mass %) of the homopolymer of the polymer block (A) and the homopolymer of the chloroprene-based polymer block (B) in the mixed polymer were determined by analysis in the same manner as in Example 1. The analysis results are shown in Table 3.

### (Comparative Example 8)

Polymerization was carried out using an autoclave with a capacity of 10 L and a stirrer and a jacket for heating and cooling. 3150 g of pure water, 168 g of tall rosin raw rosin (manufactured by Harima Chemicals Group, Inc.), 52.5 g of potassium hydroxide, 17.5 g of sodium salt of β-naphthalene sulfonic acid formalin condensate (manufactured by Kao Corporation, product name: DEMOL N), 3325 g of chloroprene monomer and 175 g of 2,3-dichloro-1,3-butadiene monomer, and 1.05 g of dodecyl mercaptan were charged, the internal temperature was set to 10°C, and the mixture was stirred under a nitrogen stream at 200 rpm. By adding 3.5 g of potassium persulfate as a polymerization initiator, polymerization was started. When the polymerization rate reached 89%, the polymerization was stopped by adding a 10% by weight aqueous solution of N,N-diethylhydroxylamine, which is a polymerization inhibitor. For the measurement of physical properties, the remaining latex was used in the next polymerization step. The obtained latex was used to prepare a film for evaluation.

### [Analysis]

### (Measurement of Number Average Molecular Weight and Molecular Weight Distribution of Polymer Block (A))

The number average molecular weight and the molecular weight distribution are polystyrene-equivalent values measured by gel permeation chromatography (GPC) and are measured values under the measurement conditions described below.
Device: HLC-8320 (manufactured by Tosoh Corporation)
Column: 3 TSKgel GMHHR-H in series
Temperature: 40°C
Detection: differential refractometer
Solvent: tetrahydrofuran
Calibration curve: made using standard polystyrene (PS).

### (Glass Transition Temperature of Polymer Block (A))

The glass transition temperature was measured by the following method using a differential scanning calorimeter in accordance with JIS K7121.

### Devic: DSC1 (manufactured by Mettler-Toledo International Inc.)

Procedure: Under a nitrogen stream of 50 ml/min, the temperature was raised to 120°C at a heating rate of 10°C/min, kept at 120°C for 10 minutes, and then cooled to -60°C. Based on the DSC curve obtained by raising the temperature to 120°C at a heating rate of 10°C/min, the temperature of the intersection of the straight line, extending the base line on the high temperature side to the low temperature side, and the tangent line, drawn at the point where the gradient is maximum in the curve on the high temperature side of the peak, was defined as the glass transition temperature.

### (Measurement of Content of Polymer Block (A) and Chloroprene-based Polymer Block (B) in Chloroprene-based Block Copolymer)

Measurement was performed by the following method using a pyrolysis gas chromatogram and 1H-NMR.

Pyrolysis gas chromatogram
Device: HP5890-II
Column: DB-5 0.25 mmϕ × 30 m (film thickness 1.0 µm)
Columntemperature:50°C (5min)→10°C/min→150°C→25°C/min→300°C
Injection port temperature: 250°C
Detector temperature: 280°C
Detector: FID
1H-NMR

### Device: JNM-ECX-400 (manufactured by JEOL Ltd.)

Procedure: The chloroprene-based block copolymer comprising the polymer block (A) and the chloroprene-based polymer block (B) containing no polyfunctional monomer unit is analyzed by a pyrolysis gas chromatogram, and a calibration line is obtained, based on the area ratio of a peak derived from the polymer block (A) and a peak derived from the chloroprene-based polymer block (B), and the contents of the polymer block (A) and the chloroprene-based polymer block (B) in the chloroprene-based block copolymer obtained by 1H-NMR measurement. A sample of the chloroprene-based block copolymer precipitated by mixing the sampled latex with methanol was measured by a pyrolysis gas chromatogram. From the area ratio of a peak derived from the polymer block (A) and a peak derived from the chloroprene-based polymer block (B), the contents of the polymer block (A) and the chloroprene-based polymer block (B) in the chloroprene-based block copolymer were determined using the calibration line prepared above.

### [Preparation of Sample for Tensile Test]

### (Preparation of Latex Containing Chloroprene-based Block Copolymer)

2 parts by mass of a butylation reaction product of p-cresol and dicyclopentadiene (manufactured by OUCHI SHINKO CHEMICAL INDUSTRIAL CO.,LTD, product name "Nocrak PBK") as an antioxidant, 0.3 parts by mass of sodium lauryl sulfate (manufactured by Kao Corporation, product name "EMAL 10N") and water were added to 100 parts by mass (solid content equivalent) of the chloroprene-based block copolymer in the latex obtained in the polymerization step 2 so that the solid content concentration of the mixture is 30% by mass and the mixture was prepared by mixing at 20°C for 16 hours using a ceramic ball mill.

### (Making a film)

A ceramic cylinder having an outer diameter of 50 mm was immersed in a coagulating solution containing 62 parts by mass of water, 35 parts by mass of potassium nitrate tetrahydrate, and 3 parts by mass of calcium carbonate for 1 second and taken out. After drying for 4 minutes, it was immersed in the latex prepared above for 2 minutes. Then, it was washed with running water at 45°C for 1 minute and heated at 130°C for 30 minutes to remove water, and a film for a tensile test (140×150 mm, thickness: 0.2 mm) was prepared.

### [Evaluation of Tensile Properties]

The produced film was heat-treated at 130°C for 30 minutes, and then the modulus at 500% elongation, the tensile strength at break, and the elongation at break were measured in accordance with JIS K6251. When the modulus at 500% elongation was 3.0 MPa or less, the tensile strength at break was 17 MPa or more, and the elongation at break was 900% or more, it was regarded as an acceptable product.

### [Evaluation of Heat-aging Resistance]

The produced immersion-molded film was subjected to a heat-aging test at 100°C for 22 hours in a forced circulation type heat-aging tester, and then 500% elongation modulus, tensile strength at break, and elongation at break were measured in accordance with JIS K6251. When the modulus at 500% elongation was 3.0 MPa or less, the tensile strength at break was 17 MPa or more, and the elongation at break was 900% or more, it was regarded as an acceptable product.

### [Evaluation of Immersion-moldability]

A film was produced by the same method as the above-mentioned film production, and the immersion-moldability was evaluated based on the ease of peeling and the appearance of the peeled film when the film was peeled from a ceramic cylinder having an outer diameter of 50 mm, using the following criteria.

3: The film can be easily peeled off from the ceramic cylinder, and the appearance of the film is good.

2: The film is easy to peel off from the ceramic cylinder, and the film has some wrinkles.

1: It is difficult to peel off the film from the ceramic cylinder, and the film has some wrinkles. When the score is 2 or more, it was regarded as an acceptable product.

**[Table 1]**

| Table 1-1 | | | | | | | | | | | |
|---|---|---|---|---|---|---|---|---|---|---|---|
| | | | Example | | | | | | | | |
| | | | 1 | 2 | 3 | 4 | 5 | 6 | 7 | 8 | 9 |
| polymer block (A) | monomer unit | - | styrene | styrene | styrene | styrene | styrene | styrene | styrene | styrene | styrene |
| | number average molecular weight | g/mol | 15,144 | 15,231 | 15,072 | 15,122 | 15,131 | 15,129 | 15,157 | 15,157 | 15,143 |
| | molecular weight distribution | - | 1.18 | 1.20 | 1.17 | 1.21 | 1.18 | 1.17 | 1.18 | 1.21 | 1.18 |
| | glass transition temperature | °C | 90 | 92 | 90 | 92 | 90 | 91 | 90 | 90 | 89 |
| chloroprene-based polymer block (B) | polyfunctional monomer unit | - | 1,9-nonanediol dimethacrylate | 1,9-nonanediol dimethacrylate | 1,9-nonanediol dimethacrylate | 1,9-nonanediol diacrylate | ethylene glycol dimethacrylate | divinyl benzene | none | triallyl isocyanurate | hydroxy pyvalypivlate diacrylate |
| content of polymer block (A) and chloroprene-based polymer block (B) in chloroprene-based block copolymer | polymer block (A) | mass% | 8.9 | 5.3 | 14.8 | 9.1 | 8.8 | 8.9 | 8.9 | 9.0 | 9.2 |
| | chloroprene-based polymer block (B) | mass% | 91.1 | 94.7 | 85.2 | 90.9 | 91.2 | 91.1 | 91.1 | 91.0 | 908 |
| tensile property | modulus at 500% elongation | MPa | 2.0 | 1.6 | 2.4 | 2.0 | 1.9 | 2.2 | 1.3 | 2.8 | 2.5 |
| | tensile strength at brake | MPa | 20 | 18 | 24 | 21 | 20 | 21 | 18 | 22 | 21 |
| | elongation at break | % | 1065 | 1230 | 1016 | 1074 | 1071 | 1026 | 965 | 931 | 976 |
| tensile property after heat-aging test | modulus at 500% elongation | MPa | 1.8 | 1.5 | 2.2 | 1.9 | 1.7 | 2.0 | 0.8 | 2.6 | 2.4 |
| | tensile strength at brake | MPa | 20 | 18 | 23 | 19 | 18 | 21 | 17 | 21 | 21 |
| | elongation at break | % | 1067 | 1227 | 1013 | 1070 | 1070 | 1028 | 971 | 933 | 980 |
| immersion-moldability | | - | 3 | 3 | 3 | 3 | 3 | 3 | 3 | 2 | 2 |

**Table 1-2**

| | | | Example | | | | Comparative Example | | | | |
|---|---|---|---|---|---|---|---|---|---|---|---|
| | | | 10 | 11 | 12 | 13 | 1 | 2 | 3 | 4 | 5 |
| polymer block (A) | monomer unit | - | styrene | styrene | styrene | methyl meth acrylate | styrene | styrene | - | styrene | styrene |
| | number average molecular weight | g/mol | 15,138 | 19,852 | 19,622 | 20,315 | 15,011 | 29,876 | - | 14,104 | 19,003 |
| | molecular weight distribution | - | 1.18 | 1.22 | 1.16 | 1.24 | 1.17 | 1.26 | - | 1.26 | 1.24 |
| | glass transition temperature | °C | 91 | 96 | 96 | 107 | 89 | 103 | - | 90 | 95 |
| chloroprene-based polymer block (B) | polyfunctional monomer unit | - | trimethylol propane triacrylate | 1,9-nonanediol dimethacrylate | none | 1,9-nonanediol dimethacrylate | 1,9-nonanediol dimethacrylate | 1,9-nonanediol dimethacrylate | 1,9-nonanediol dimethacrylate | none | none |
| content of polymer block (A) and chloroprene-based polymer block (B) in chloroprene-based block copolymer | polymer block (A) | mass% | 8.8 | 28.2 | 28.2 | 8.9 | 3.8 | 32.3 | - | 12.2 | 18.0 |
| | chloroprene-based polymer block (B) | mass% | 91.2 | 71.8 | 71.8 | 91.1 | 96.2 | 67.7 | - | 87.8 | 82.0 |
| tensile property | modulus at 500% elongation | MPa | 2.7 | 3.0 | 2.7 | 2.8 | 1.4 | 3.3 | 0.5 | 1.4 | 2.0 |
| | tensile strength at brake | MPa | 23 | 28 | 25 | 27 | 13 | 27 | 5 | 11 | 13 |
| | elongation at break | % | 918 | 908 | 904 | 923 | 1261 | 889 | 1254 | 1221 | 1152 |
| tensile property after heat-aging test | modulus at 500% elongation | MPa | 2.5 | 2.9 | 2.5 | 2.7 | 1.2 | 3.1 | 0.7 | 1.4 | 1.9 |
| | tensile strength at brake | MPa | 22 | 28 | 23 | 26 | 13 | 25 | 6 | 10 | 13 |
| | elongation at break | % | 914 | 910 | 906 | 920 | 1265 | 888 | 1008 | 1182 | 1095 |
| immersion-moldability | | - | 2 | 3 | 3 | 2 | 2 | 3 | 1 | 1 | 1 |

### [Table 2]

**Table 2**

| | | | Comparative Example 6 |
|---|---|---|---|
| first block | monomer unit | - | styrene |
| | number average molecular weight | g/mol | 7,449 |
| | molecular weight distribution | - | 1.17 |
| | glass transition temperature | °C | 88 |
| content of first, third block (styrene block) and second block (chloroprene block) in triblock copolymer | first, third block (styrene block) | mass% | 12.2 |
| | second block (chloroprene block) | mass% | 87.8 |
| tensile property | modulus at 500% elongation | MPa | 2.4 |
| | tensile strength at brake | MPa | 15 |
| | elongation at break | % | 1024 |
| tensile property after heat-aging test | modulus at 500% elongation | MPa | 2.2 |
| | tensile strength at brake | MPa | 15 |
| | elongation at break | % | 1020 |
| immersion-moldability | | - | 3 |

### [Table 3]

**Table 3**

| | | | Comparative Example 7 |
|---|---|---|---|
| homopolymer of polymer block (A) | monomer unit | - | styrene |
| | number average molecular weight | g/mol | 14,821 |
| | molecular weight distribution | - | 1.18 |
| | glass transition temperature | °C | 89 |
| content of homopolymer of polymer block (A) and homopolymer of chloroprene polymer block (B) in the polymer obtained by mixing | homopolymer of polymer block (A) | mass% | 9.1 |
| | homopolymer of chloroprene-based polymer block (B) | mass% | 90.9 |
| tensile property | modulus at 500% elongation | MPa | 1.4 |
| | tensile strength at brake | MPa | 14 |
| | elongation at break | % | 1145 |
| tensile property after heat-aging test | modulus at 500% elongation | MPa | 2.2 |
| | tensile strength at brake | MPa | 13 |
| | elongation at break | % | 940 |
| immersion-moldability | | - | 1 |

### [Table 4]

**Table 4**

| | | | Comparative Example 8 |
|---|---|---|---|
| tensile property | modulus at 500% elongation | MPa | 1.1 |
| | tensile strength at brake | MPa | 21 |
| | elongation at break | % | 1190 |
| tensile property after heat-aging test | modulus at 500% elongation | MPa | 3.4 |
| | tensile strength at brake | MPa | 23 |
| | elongation at break | % | 875 |
| immersion-moldability | | - | 2 |

Each of the film in Examples 1 to 13 has the modulus at 500% elongation of 3.0 MPa or less and excellent flexibility, tensile strength at break of 17 MPa or more, and elongation at break of 900% or more and excellent tensile properties, even if using no vulcanizing agent and no vulcanizing accelerator. Further, the film after the heat-aging test has the modulus at 500% elongation of 3.0 MPa or less and excellent flexibility, tensile strength at break of 17 MPa or more and elongation at break of 900% or more, excellent tensile properties, and the heat-aging resistance and, in addition, immersion-moldability were also excellent. On the other hand, in Comparative Examples 1 to 8, any of the physical properties of flexibility, tensile properties, and heat-aging property was inferior.

### INDUSTRIAL APPLICABILITY

The immersion-molded body obtained from the chloroprene-based block copolymer latex of the present invention has excellent flexibility, tensile properties, heat-aging resistance and immersion-moldability, and can be suitably used for surgical gloves, gloves, balloons, catheters, and the like.

## Claims

1. An immersion-molded body, wherein:
the immersion-molded body is obtained using a latex;
the latex comprises a chloroprene-based block copolymer;
the chloroprene-based block copolymer contains 5 to 30% by mass of a polymer block (A) and 70 to 95% by mass of a chloroprene-based polymer block (B);
the polymer block (A) is derived from a monomer;
when the monomer is polymerized alone, a polymer with a glass transition temperature of 80°C or higher can be obtained;
the chloroprene-based polymer block (B) includes a chloroprene monomer unit; and
when the immersion-molded body is heat-treated at 130°C for 30 minutes, a tensile strength at break of the heat-treated immersion-molded body measured in accordance with JIS K6251 is 17 MPa or more.

2. The immersion-molded body of Claim 1, wherein:
the immersion-molded body is obtained using the latex;
the latex comprises the chloroprene-based block copolymer;
the chloroprene-based block copolymer contains 5 to 15% by mass of the polymer block (A) and 85 to 95% by mass of the chloroprene-based polymer block (B) with respect to 100% by mass of the chloroprene-based block copolymer.

3. The immersion-molded body of Claim 1 or 2, wherein the chloroprene-based polymer block (B) has the chloroprene monomer unit and a polyfunctional monomer unit.

## Patentansprüche

1. Tauchgeformter Körper, wobei:
der tauchgeformte Körper unter Verwendung eines Latex erhalten wird;
der Latex ein Blockcopolymer auf Chloropren-Basis umfasst;
das Blockcopolymer auf Chloropren-Basis 5 bis 30 Masse-% eines Polymerblocks (A) und 70 bis 95 Masse-% eines Polymerblocks (B) auf Chloropren-Basis umfasst;
der Polymerblock (A) von einem Monomer abgeleitet ist;
wenn das Monomer allein polymerisiert wird, ein Polymer mit einer Glasübergangstemperatur von 80 °C oder mehr erhalten werden kann;
der Polymerblock (B) auf Chloropren-Basis eine Chloropren-Monomer-Einheit umfasst; und
wenn der tauchgeformte Körper bei 130 °C für 30 Minuten wärmebehandelt wird, eine Reißfestigkeit des wärmebehandelten tauchgeformten Körpers, gemessen gemäß JIS-K6251, 17 MPa oder mehr beträgt.

2. Tauchgeformter Körper nach Anspruch 1, wobei:
der tauchgeformte Körper unter Verwendung des Latex erhalten wird;
der Latex das Blockcopolymer auf Chloropren-Basis umfasst;
das Blockcopolymer auf Chloropren-Basis 5 bis 15 Masse-% des Polymerblocks (A) und 85 bis 95 Masse-% des Polymerblocks (B) auf Chloropren-Basis umfasst, bezogen auf 100 Masse-% des Blockcopolymers auf Chloropren-Basis.

3. Tauchgeformter Körper nach Anspruch 1 oder 2, wobei der Polymerblock (B) auf Chloropren-Basis die Chloropren-Monomer-Einheit und eine polyfunktionale Monomer-Einheit umfasst.

## Revendications

1. Corps moulé par immersion :
le corps moulé par immersion étant obtenu en utilisant un latex ;
le latex comprenant un copolymère séquencé à base de chloroprène ;
le copolymère séquencé à base de chloroprène contenant de 5 à 30 % en masse d'une séquence polymère (A) et de 70 à 95 % en masse d'une séquence polymère à base de chloroprène (B) ;
la séquence polymère (A) étant dérivée d'un monomère ;
lorsque le monomère est polymérisé seul, un polymère ayant une température de transition vitreuse de 80 °C ou plus pouvant être obtenu ;
la séquence polymère à base de chloroprène (B) incluant une unité monomère de chloroprène ; et
lorsque le corps moulé par immersion est traité thermiquement à 130 °C pendant 30 minutes,
la résistance à la rupture du corps moulé par immersion traité thermiquement, mesurée conformément à la norme JIS K6251, étant de 17 MPa ou plus.

2. Corps moulé par immersion selon la revendication 1 :
le corps moulé par immersion étant obtenu en utilisant le latex ;
le latex comprenant le copolymère séquencé à base de chloroprène ;
le copolymère séquencé à base de chloroprène contenant de 5 à 15 % en masse de la séquence polymère (A) et de 85 à 95 % en masse de la séquence polymère à base de chloroprène (B) par rapport à 100 % en masse du copolymère séquencé à base de chloroprène.

3. Corps moulé par immersion selon la revendication 1 ou 2, la séquence polymère à base de chloroprène (B) possédant l'unité monomère de chloroprène et une unité monomère polyfonctionnelle.
